Europäisches Patentamt

(19) **European Patent Office**

**Office européen des brevets**

(11) Numéro de publication: **0 063 068**
**B1**

(12) **FASCICULE DE BREVET EUROPEEN**

(45) Date de publication du fascicule du brevet:
**25.09.85**

(51) Int. Cl.⁴: **G 02 B 6/38**

(21) Numéro de dépôt: **82400556.5**

(22) Date de dépôt: **26.03.82**

(54) **Procédé de montage concentrique d'une fibre optique dans un embout.**

(30) Priorité: **06.04.81 FR 8106852**

(43) Date de publication de la demande:
**20.10.82 Bulletin 82/42**

(45) Mention de la délivrance du brevet:
**25.09.85 Bulletin 85/39**

(84) Etats contractants désignés:
**DE GB IT**

(56) Documents cités:
**EP - A - 0 008 941**
**EP - A - 0 026 139**
**WO - A - 81/03227**
**FR - A - 2 291 509**
**FR - A - 2 306 458**
**FR - A - 2 310 578**
**FR - A - 2 408 152**
**GB - A - 1 458 896**
**GB - A - 1 480 445**
**GB - A - 2 040 062**
**US - A - 4 113 346**
**US - A - 4 135 781**
**US - A - 4 193 664**

**NTC'77 CONFERENCE RECORD, vol. 2, 1977, NEW YORK (US), M.L. DAKSS "Review of recent fiber splicing techniques", pages 23.5-1 - 23.5-5**

(73) Titulaire: **SOCAPEX, 10 bis, quai Léon Blum, F-92153 Suresnes (FR)**

(72) Inventeur: **Dousset, René, THOMSON-CSF SCPI 173, bld Haussmann, F-75360 Paris Cedex 08 (FR)**

(74) Mandataire: **Ruellan-Lemonnier, Brigitte et al, THOMSON-CSF SCPI 173, boulevard Haussmann, F-75379 Paris Cedex 08 (FR)**

ACTORUM AG

# Description

La présente invention concerne un procédé de montage concentrique d'une fibre optique dans un embout percé d'un canal cylindrique axial.

Il est connu, par exemple du brevet américain 4 193 664 de réaliser des embouts de connecteurs pour monofibre optique, de tels embouts étant destinés au raccordement des fibres entre elles. Le problème qui se pose actuellement dans la réalisation de ces connecteurs monovoie pour fibre optique est le centrage de la fibre dans l'embout permettant une transmission de lumière avec le minimum de pertes au niveau de la connexion. Dans le brevet américain cité ci-dessus, l'embout comporte notamment deux plans de référence en forme de V par rapport auxquels la fibre optique est positionnée. Dans ce but, on utilise un appareil de centrage comportant par exemple deux plans disposés en forme de V, complémentaires de ceux de l'embout, tandis que la fibre est elle-même positionnée dans une gorge constituée par deux plans parallèles aux précédents en forme de V et disposés respectivement à des distances très précises les uns des autres. La fibre est ensuite immobilisée à l'aide d'une résine polymérisable dans l'embout puis celui-ci est retiré desdits moyens de positionnement et après polissage de l'extrémité de l'embout, celui-ci est prêt à l'emploi.

Toutefois, un tel procédé présente un certain nombre d'inconvénients. En particulier, l'embout doit posséder deux plans formant un V et ayant un angle très précis à respecter l'un par rapport à l'autre. Ceci est assez difficile à réaliser et les embouts utilisés dans cette technique sont, par conséquent, d'un prix de revient élevé. Par ailleurs, au cours du centrage de la fibre, il est nécessaire d'appliquer fortement les plans de référence de l'embout contre les plans de référence de l'appareil et les opérations ainsi réalisées doivent être réalisés avec beaucoup de soin. Bien que cette technique donne dans l'ensemble satisfaction, il est de nombreux cas où l'on peut se contenter d'une précision moins importante que celle atteinte avec celle-ci, dans la mesure où la solution mis en œuvre est beaucoup plus simple à réaliser.

On peut, par exemple, utiliser des connecteurs de fibres optiques ayant des embouts cylindriques. Pour éviter les pertes de transmission lors de la connexion des embouts, il convient de centrer correctement la fibre par rapport à l'embout.

Il est connu, par exemple de FR 2 408 152, un procédé de centrage de fibre optique dans un embout de connecteur, selon lequel la fibre est introduite dans le canal cylindrique de l'embout, à travers une douille de centrage, une résine liquide étant introduite ensuite dans ledit canal, en vue d'assurer le centrage ultérieur de ladite fibre. Le manchon de l'embout est ensuite introduit dans un centreur de forme intérieure cylindrique complémentaire de celle du manchon, la fibre à centrer s'introduisant alors conjointement dans une ouverture cylindrique percée au centre dudit centreur. L'ouverture cylindrique du centreur est ensuite amenée à un diamètre rigoureusement égal à celui de la fibre qui y est introduite, de manière à assurer le centrage de cette dernière, la résine maintenant la fibre dans cette position après polymérisation, et ledit centreur étant retiré après polymérisation de la résine. Toutefois, la quantité de résine injectée dans le canal cylindrique est difficilement contrôlable et l'on constate généralement une pollution du centreur après chaque opération d'alignement de la fibre, due à un excédent de résine venant se déposer sur celui-ci. Le nettoyage du centreur entre chaque opération ralentit considérablement le montage de tels connecteurs (cf. également EP-A-0 008 941 et FR-A-2 318 578).

La présente invention a pour but d'éviter les inconvénients mentionnés ci-dessus.

A cet effet, la présente invention a pour objet un procédé de montage concentrique d'une fibre optique dans un embout percé d'un canal cylindrique axial, ledit embout étant du type dont la partie antérieure présente une forme extérieure cylindrique concentrique audit canal axial de façon à constituer un manchon de centrage, ledit procédé comportant l'ensemble des étapes suivantes:

– on introduit le manchon dans un centreur de forme intérieure cylindrique complémentaire de celle du manchon et dont le fond est percé en son centre d'une ouverture cylindrique de diamètre sensiblement égal à celui de la fibre à centrer,

– on introduit ensuite la fibre dans le canal cylindrique de l'embout à travers une douille de centrage placée dans la partie postérieure de l'embout, jusqu'à ce que celle-ci vienne déboucher au travers de l'ouverture cylindrique du centreur de manière à se trouver centrée par rapport audit canal de l'embout,

– on injecte ensuite une première résine liquide polymérisable dans ledit canal de manière à maintenir la fibre dans cette position après polymérisation de ladite première résine, l'extrémité antérieure du canal cylindrique du manchon étant par ailleurs pourvue d'un chanfrein formant petite cavité et l'extrémité antérieure du manchon étant maintenue à une distance suffisante du fond du centreur au cours de cette étape d'introduction de la première résine dans ledit canal, de façon à éviter le contact entre ladite première résine et ledit centreur,

– on retire ledit centreur après polymérisation de la première résine,

– on remplit ensuite d'une seconde résine polymérisable ledit chanfrein formant cavité ménagé à l'extrémité antérieure du canal cylindrique du manchon, ladite seconde résine polymérisable formant un cône en saillie par rapport à la face antérieure du manchon, et

– on soumet enfin ledit embout à une opération de rectifiage de sa face antérieure.

Dans le procédé selon l'invention, le manchon ayant des dimensions extérieures très précises et le centreur ayant des dimensions intérieures très précises, ainsi qu'une position de l'ouverture cylindrique très précise par rapport aux parois internes cylindriques complémentaires de celles du manchon, la fibre optique est ainsi parfaitement centrée dans le manchon. La résine polymérisable injectée dans le canal de l'embout est par ailleurs choisie parmi les résines thermo-durcissables qui polymérisent très rapidement à température ambiante, la fibre étant ainsi rapidement et définitivement centrée dans l'embout. Le chanfrein ménagé sur l'extrémité antérieure du canal cylindrique du manchon est par ailleurs, comme on le voit, destiné à éviter une pollution du centreur par la résine. Ce chanfrein est de préférence constitué par une forme cylindrique de diamètre supérieur au diamètre du canal cylindrique. Ceci permet en particulier d'éviter que la résine ne dépasse sensiblement de la face antérieure du manchon. Par ailleurs, on munit l'embout d'une part, et le centreur d'autre part, de butées qui coopèrent entre elles de manière à laisser un espace entre la face antérieure du manchon et le fond de la cavité cylindrique intérieure du centreur.

Par ailleurs, l'ouverture cylindrique disposée sensiblement au centre de la cavité cylindrique du centreur possède elle-même un chanfrein destiné à faciliter l'introduction de la fibre optique.

L'utilisation d'une douille de centrage à proximité de l'extrémité postérieure de l'embout a pour but d'éviter que la fibre soit parfaitement centrée dans l'ouverture cylindrique du centreur, mais légèrement décalée par rapport au centre du canal cylindrique au niveau de la face antérieure du manchon. Cette douille de centrage, de longueur suffisante, maintient ainsi sensiblement la fibre dans l'axe du canal cylindrique et coopère avec l'ouverture cylindrique du centreur pour réaliser un centrage encore amélioré de la fibre dans l'embout.

Après retrait du centreur du manchon, on dépose ensuite une goutte de résine, de préférence identique à la résine déjà utilisée, dans le chanfrein de forme cylindrique situé vers la face antérieure du manchon. De cette manière, on remplit ainsi complétement ce chanfrein de résine, celle-ci étant mise en quantité suffisante pour réaliser un cône de résine disposé au-dessus de la face antérieure de l'embout et ayant pour axe la fibre optique.

L'opération de rectifiage final de la face antérieure de l'embout est enfin effectuée au moyen d'un polissoir comportant une ouverture centrale ayant les mêmes dimensions intérieures, aux tolérances près, que celles du manchon. Celui-ci vient alors affleurer par sa surface antérieure la face plane du polissoir. Afin que l'alignement de ces deux faces soit parfait et corresponde aux conditions d'utilisation, ce polissoir est muni de moyens de fixation complémentaires de ceux de l'embout. Les dimensions du polissoir sont alors calculées de manière à ce que lorsque ces moyens de fixation sont assemblés, la face antérieure du manchon et la face plane du polissoir soient rigoureusement alignées. Le cône de résine polymérisée entourant la fibre dépasse alors largement au-dessus de la face plane dudit polissoir; on rectifie alors l'ensemble fibre et résine par alignement sur la face plane dudit polissoir. On obtient ainsi après séparation du polissoir et de l'embout, un embout dans lequel la fibre optique est parfaitement centrée, et dont l'extrémité est parfaitement alignée avec la face antérieure du manchon.

L'invention sera mieux comprise à l'aide des exemples de réalisation suivants, donnés à titre non limitatif, conjointement avec les figures qui représentent:

la figure 1, un embout de connecteur pour monofibre optique dont le manchon est revêtu de son centreur, illustrant l'étape de centrage du procédé selon l'invention;

la figure 2, l'étape de polissage de l'extrémité de l'embout revêtu de son polissoir;

la figure 3, une vue du centreur utilisable dans le procédé selon l'invention;

la figure 4, une vue schématique explicitant le rôle de la douille de centrage de l'embout.

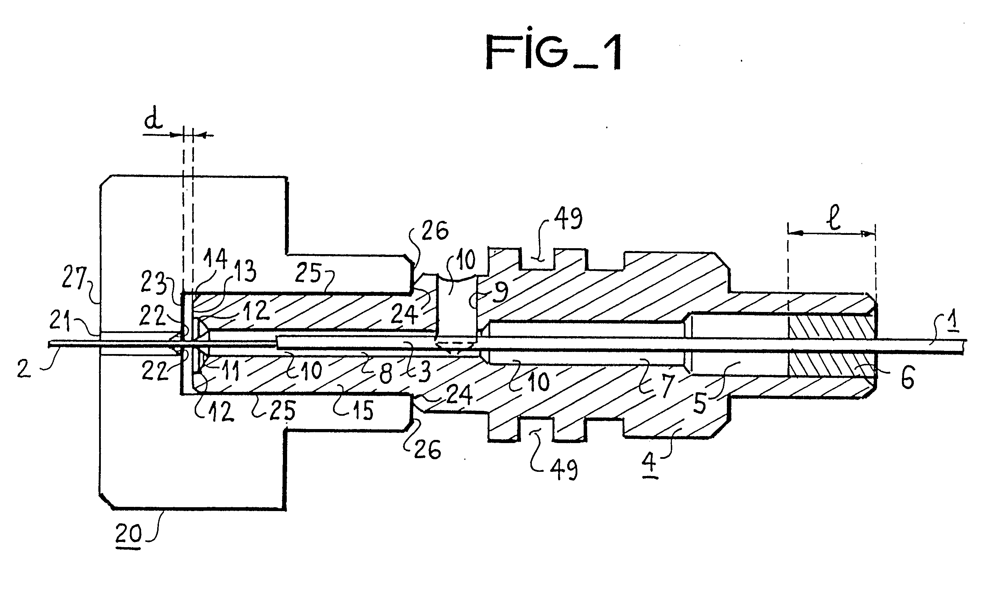

Sur la figure 1, on a représenté la première étape du procédé selon l'invention qui consiste à centrer la fibre dans l'embout et à couler une résine polymérisable dans le canal cylindrique central de celui ci. Le câble optique 1 comporte une fibre optique 2 éventuellement revêtue de sa gaine optique, et une gaine de protection 3. Cette gaine peut être, soit une enduction, soit éventuellement la gaine optique elle-même dans le cas où celle-ci est une gaine souple du type silicone. La fibre optique 2 est disposée dans le canal cylindrique central de l'embout 4, canal composé successivement de plusieurs parties de diamètres décroisssants depuis la partie postérieure vers la partie antérieure de l'embout. La partie postérieure 5 de ce canal cylindrique est de diamètre relativement important par rapport au diamètre de la fibre revêtue de sa gaine pour permettre le logement de la douille de centrage 6. Il se poursuit par une partie centrale 7 de diamètre plus faible, elle-même se poursuivant par une partie antérieure 8 de diamètre peu supérieur au diamètre extérieur de la fibre revêtue de sa gaine. L'embout 4 comporte à sa partie antérieure le manchon de centrage 15 proprement dit. Celui-ci de forme cylindrique a des cotes extérieures précises servant de référence. Le canal cylindrique 8 est parfaitement centré par rapport à l'axe du manchon 15, dans la limite des tolérances acceptables. Ce manchon 15 se termine par un chanfrein 14 qui relie sa paroi cylindrique 25 à la face antérieure 13 dudit manchon. Cette face antérieure est elle-même parfaitement plane et perpendiculaire à l'axe du manchon 15. Celui-ci se termine au niveau de la face antérieure 13 par un chanfrein interne 12 composé d'une partie cylindrique prolongée vers l'intérieur du canal cylindrique par une partie conique rejoignant ledit canal, ce qui facilite l'usinage de cette forme. De préférence, on a constaté que les meilleurs résultats étaient obtenus lorsque cette partie conique du chanfrein n'existait pas, c'est-à-dire lorsque celui-ci avait une forme cylindrique. Dans cette réalisation, l'embout 4 possède également à proximité du manchon 15 mais non sur celui-ci, un trou cylindrique radial 9 qui communique avec le canal cylindrique antérieur 8 ainsi qu'avec les parties centrale et postérieure 7 et 5 du canal. L'embout 4 possède également des cavités 49 permettant le logement d'un joint et d'une douille, non représentés sur la figure, afin de donner à celui-ci les caractéristiques bien connues de l'homme de l'art des connecteurs du type «SMA».

Sur le manchon 15, est positionné le centreur 20. Celui-ci possède une cavité interne cylindrique de diamètre identique au diamètre extérieur du cylindre de référence 15, aux tolérances près. Les parois internes de ce centreur sont également représentées sur la figure par le repère 25 comme les parois externes du manchon 15. Cette cavité interne du centreur se prolonge vers la partie postérieure de celui-ci par des butées 26 qui viennent coopérer avec les butées correspondantes 24 de l'embout 4. Ces butées 24 au niveau de l'embout 4 sont simplement réalisées par une collerette de diamètre supérieur au diamètre du cylindre de référence 15. Les butées 26 sont constituées par les plans perpendiculaires à l'axe de la cavité du centreur. La profondeur de la cavité interne du centreur est légèrement supérieure à la longueur du manchon 15: lorsque les butées 24 et 26 viennent au contact l'une de l'autre, la face antérieure du manchon 15 et le fond 23 de la cavité interne du centreur sont à une distance l'une de l'autre égal à.d. En pratique, une distance d de l'ordre de 0,1 mm s'est montrée particulièrement satisfaisante.

L'ouverture cylindrique 21 disposée exactement au centre de la cavité cylindrique du centreur et traversant celui-ci de part en part, de sa face 23 à sa face 27, est munie d'un chanfrein 22 permettant une introduction plus aisée de la fibre 2.

Les éléments étant disposés comme décrits ci-dessus et ainsi que représentés sur la figure 1, on introduit une résine liquide polymérisable 10 dans l'ouverture 9, celle-ci se répandant partiellement dans le canal 7 et remplissant complètement le canal 8 jusqu'à former un chanfrein 11 à l'extrémité dudit canal 8. Comme résine polymérisable, on utilisera toute résine bien connue de l'homme de l'art pour ce type de réalisation. En particulier, celui-ci choisira, selon le diamètre des ouvertures, la nature des fibres utilisées ainsi que de leurs gaines, ... et d'une manière générale de tous les paramètres rentrant en ligne de compte, une résine ou colle polymérisable de fluidité adaptée pour qu'elle se comporte de la manière décrite ci-dessus. Ceci peut être réalisé par de simples manipulations de routine avec les résines polymérisables disponibles dans le commerce. En particulier, on utilisera les résines époxy ou colle époxy bien connues de l'homme de l'art, mono ou bi-composants, ainsi que les colles de type acrylates. En particulier, on utilisera les résines qui polymérisent à température ambiante dans un temps très court de l'ordre de quelques minutes. Lorsque la polymérisation est réalisée, le centreur est ensuite retiré de l'embout 4.

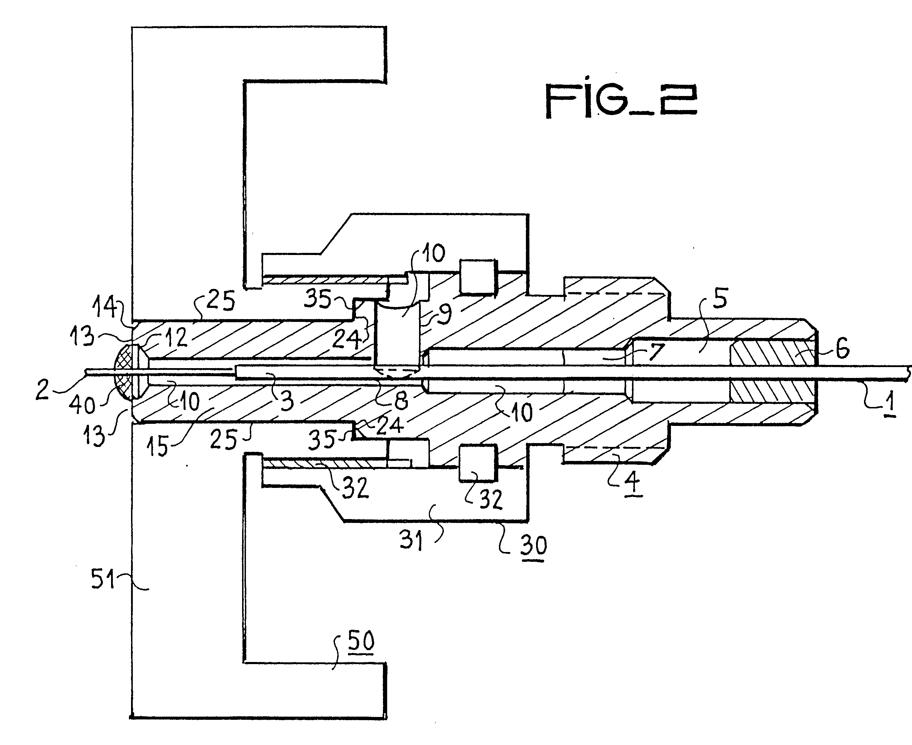

L'opération suivante consiste à remplir le chanfrein 12 à l'aide d'une goutte de résine telle que décrite ci-dessus, de manière à former sensiblement un cône au-dessus de la face de contact 13 du manchon 15. La suite des opérations est alors représentée sur la figure 2, sur laquelle les mêmes éléments que ceux de la figure 1 portent les mêmes références. L'embout 4 a été revêtu du polissoir 50. Ce polissoir comporte un canal cylindrique intérieur de même dimensions aux tolérances près que les dimensions extérieures du manchon 15. Ce canal cylindrique débouche sur la face antérieure 51 du polissoir 50. Celui-ci comporte des butées 35 qui viennent coopérer avec les butées 24 de l'embout 4. Ces butées sont positionnées de telle façon que la face antérieure 13 du manchon 15 soit exactement alignée avec la face antérieure 51 du polissoir 50. Le polissoir 50 possède un filetage 32 qui vient coopérer avec la bague 30 solidaire par l'intermédiaire du joint 32 de l'embout 4. L'embout muni de sa bague représente un embout de connecteur bien connu de l'homme de l'art sous la référence «SMA». La bague 30 possède un corps 31 ayant également une partie interne filetée qui vient coopérer avec le filetage 32 du polissoir 50. Ces différents filetages permettent d'amener rigoureusement en butées et maintenir fermement le polissoir et l'embout 4. La goutte de résine en forme de cône 40 qui est disposée au-dessus du chanfrein 12 du canal 8, est alors rectifiée à l'aide des moyens bien connus de l'homme de métier, de manière à aligner parfaitement l'extrémité antérieure 13 du manchon 15, la résine et la fibre optique 2. Après cette opération qui ne pose pas de difficultés particulières, le polissoir est alors rétiré de l'embout qui est prêt à l'emploi.

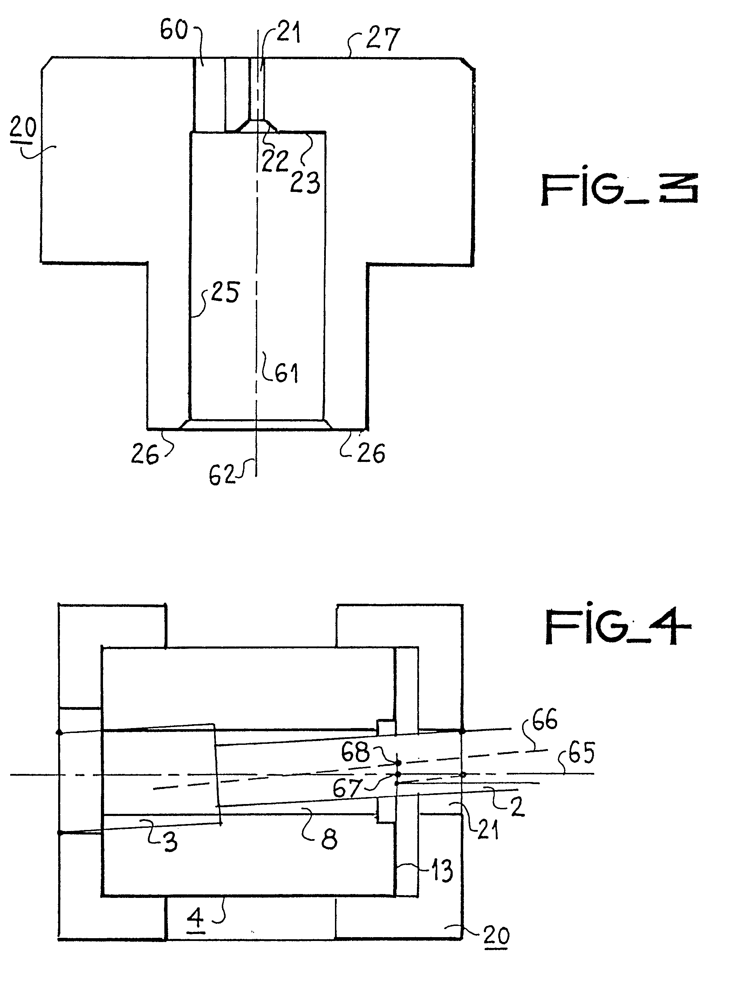

La figure 3 représente une vue détaillée du centreur selon l'invention, les mêmes éléments que ceux des figures précédentes portant les mêmes références. Ce centreur 20 possède une forme intérieure cylindrique 61, complémentaire de celle du manchon 15, ayant un axe de symétrie identique à celui de l'ouverture cylindrique 21. Par ailleurs, les cotes des parois internes 25 et celles du manchon 15 étant très voisines et ajustées, il est nécessaire de prévoir une ouverture complémentaire 60 permettant l'évacuation de l'air au cours de la manœuvre de pénétration du manchon dans le centreur.

La figure 4 représente une vue très schématique d'un embout dans lequel on n'aurait pas prévu la douille de centrage 6. Schématiquement, on a représenté l'embout 4 revêtu du centreur 20. La fibre n'étant pas maintenue par la douille de centrage 6, son axe 66 présenté nécessairement une certaine inclinaison par rapport à l'axe 65 du canal cylindrique 8. Suivant les tolérances sur la fibre et sur le trou 21, cet angle peut être variable et entraîner des erreurs de centrage relativement importantes. Ainsi, sur la figure 4 où l'on a fortement exagéré ces erreurs, on voit que le centre 67 du canal 8 au niveau de la face antérieure 13 du manchon n'est pas confondu avec le centre 68 de la fibre au niveau de cette face 13. Par conséquent, si l'autre embout auquel celui-ci va être raccordé possède la même erreur de centrage mais dans l'autre sens, on peut avoir de pertes de transmission au niveau de la connexion relativement importantes; c'est pourquoi la douille de centrage 6 selon l'invention est particulièrement nécessaire si l'on veut obtenir une connexion de bonne qualité. On peut dans tous les cas améliorer la transmission optique en prévoyant des moyens de détrompage sur chaque embout lors de leur accouplement dans un connecteur.

Suivant les cas, l'homme de métier utilisera des fibres optiques, pour mettre en œuvre l'invention, revêtues ou non de leurs gaines optiques et revêtues ou non d'une enduction de protection superficielle. Lorsqu'on utilise des fibres dures, c'est-à-dire des fibres à gaine dure, du type verre-verre ou silice-silice, il est bien entendu que la gaine optique est nécessairement maintenue sur toute la longueur de la fibre. Ces fibres étant généralement revêtues d'un enduction d'un polymère relativement souple, celui-ci peut être conservé si cette enduction est suffisamment concentrique par rapport à la gaine optique de la fibre pour l'application envisagée. Dans le cas contraire, on procédera au dénudage de la fibre de telle sorte que cette enduction ne dépasse pas la zone 7 du canal cylindrique de l'embout 4. Lorsqu'on utilise des fibres à gaines souples, on peut soit prendre référence sur la gaine si celle-ci est suffisamment concentrique, soit prendre référence directement sur la fibre. Dans ce dernier cas, on s'arrangera pour enlever cette gaine optique à l'extrémité de la fibre 2, de manière à ce que seul le cœur de la fibre lui-même soit introduit dans l'ouverture cylindrique 21 qui aura les dimensions adaptées. Pour assurer une bonne connexion, la gaine optique sera maintenue sur la fibre jusqu'au niveau de la surface 23, au-dessus de la face antérieure 13 du manchon 15.

## Revendications

1. Procédé de montage concentrique d'une fibre optique dans un embout percé d'un canal cylindrique axial (5, 7, 8), ledit embout étant du type dont la partie antérieure (15) présente une forme extérieure cylindrique concentrique audit canal axial (8) de façon à constituer un manchon de centrage, ledit procédé comportant l'ensemble des étapes suivantes:

– on introduit le manchon (15) dans un centreur (20) de forme intérieure cylindrique complémentaire de celle du manchon (15) et dont le fond est percé en son centre d'une ouverture cylindrique (21) de diamètre sensiblement égal à celui de la fibre à centrer,

– on introduit ensuite la fibre dans le canal cylindrique (5, 7, 8) de l'embout, à travers une douille de centrage (6) placée dans la partie postérieure de l'embout, jusqu'à ce que celle-ci vienne déboucher au travers de l'ouverture cylindrique (21) du centreur (20) de manière à se trouver centrée par rapport audit canal (5, 7, 8) de l'embout,

– on injecte ensuite une première résine liquide polymérisable (10) dans ledit canal de manière à maintenir la fibre dans cette position après polymérisation de ladite première résine, l'extrémité antérieure du canal cylindrique du manchon étant par ailleurs pourvue d'un chanfrein (12) formant petite cavité et l'extrémité antérieure du manchon étant maintenue à une distance suffisante du fond du centreur au cours de cette étape d'introduction de la première résine dans ledit canal, de façon à éviter le contact entre ladite première résine et ledit centreur,

– on retire ledit centreur après polymérisation de la première résine,

– on remplit ensuite d'une seconde résine polymérisable ledit chanfrein formant cavité ménagé à l'extrémité antérieure du canal cylindrique du manchon, ladite seconde résine polymérisable formant un cône en saillie par rapport à la face antérieure du manchon, et

– on soumet enfin ledit embout à une opération de rectifiage de sa face antérieure.

2. Procédé selon la revendication 1, caractérisé en ce que le centreur (20) possède des butées extérieures (26) qui viennent au contact des butées correspondantes (24) de l'embout (4).

3. Procédé selon l'une des revendications 1 ou 2, caractérisé en ce que l'opération de rectifiage de la face antérieure de l'embout consiste à ajuster sur le manchon un polissoir (50) comportant une face plane (51), ledit polissoir étant percé d'une ouverture centrale dans laquelle pénètre le manchon (15) qui vient affleurer par sa face antérieure la face plane dudit polissoir, la seconde résine (10) et la fibre (2) disposées en saillie par rapport à la face plane et la face antérieure alignées l'une par rapport à l'autre, étant rectifiées et amenées dans le même plan que lesdites faces.

## Patentansprüche

1. Verfahren zur konzentrischen Montage einer Lichtleitfaser in einem Endstück, das von einem axialen zylindrischen Kanal (5, 7, 8) durchzogen ist, wobei das Endstück derart ist, dass sein vorderer Teil (15) eine zylindrische, zu dem genannten axialen Kanal (8) konzentrische Form aufweist, so dass er eine Zentrierhülse bildet, wobei das Verfahren die Gesamtheit der folgenden Schritte umfasst:

– die Hülse (15) wird in ein Zentrierstück (20) eingeführt, dessen Innenform zylindrisch und komplementär zu der der Hülse (15) ist und dessen Boden in seiner Mitte von einer zylindrischen Öffnung (21) durchbrochen ist, deren Durchmesser im wesentlichen gleich dem der zu zentrierenden Faser ist,

– anschliessend wird die Faser in den zylindrischen Kanal (5, 7, 8) des Endstücks eingeführt und durch eine Zentrierhülse (6) hindurchgeführt, die im rückwärtigen Teil des Endstücks angeordnet ist, bis sie aus der zylindrischen Öffnung (21) des Zentrierelements (20) herausragt und in bezug auf den genannten Kanal (5, 7, 8) des Endstücks zentriert ist,

– anschliessend wird ein erstes flüssiges und polymerisierfähiges Harz (10) in den genannten Kanal eingespritzt, wobei die Faser in dieser Stellung nach der Polymerisation des genannten ersten Harzes gehalten wird und wobei das vordere Ende des zylindrischen Kanals der Hülse ferner mit einer Abschrägung (12) versehen ist, die einen kleinen Hohlraum bildet, während das vordere Ende der Hülse in einem ausreichenden Abstand vom Boden des Zentrierelementes während des Einbringens des ersten Harzes in den Kanal gehalten wird, so dass die Berührung zwischen dem genannten ersten Harz und dem genannten Zentrierelement vermieden wird,

– das Zentrierelement wird nach dem Polymerisieren des ersten Harzes herausgezogen,

– anschliessend wird die genannte, einen Hohlraum am vorderen Ende des zylindrischen Kanals der Hülse bildende Abschrägung mit einem zweiten polymerisierfähigen Harz ausgefüllt, welches einen Kegel bildet, der über die vordere Fläche der Hülse hinaussteht, und

– schliesslich wird das Endstück an seiner vorderen Fläche abgerichtet.

2. Verfahren nach Anspruch 1, dadurch gekennzeichnet, dass das Zentrierelement (20) äussere Anschläge (26) besitzt, die in Berührung mit entsprechenden Anschlägen (24) des Endstückes (4) gelangen.

3. Verfahren nach Anspruch 1 oder 2, dadurch gekennzeichnet, dass der Schritt des Abrichtens der vorderen Fläche des Endstückes darin besteht, dass auf der Hülse ein Polierwerkzeug (50) in Stellung gebracht wird, das eine ebene Fläche (51) aufweist, wobei das genannte Polierwerkzeug von einer zentralen Öffnung durchbrochen ist, worin die Hülse (15) eindringt, die mit ihrer vorderen Fläche in der ebenen Fläche des genannten Polierwerkzeugs liegt, wobei das zweite Harz (10) und die Faser (2), die über die ebene Fläche und die vordere Fläche, welche miteinander fluchten, hinausragen, abgerichtet und in dieselbe Ebene wie die genannten Flächen gebracht werden.

**Claims**

1. Method of concentric mounting of an optical fiber in a fitting pierced by an axial cylindrical channel (5, 7, 8), said fitting being of the type having a forward portion (15) with an outer cylindrical shape which is concentric with said axial channel (8) in a manner to form a centering sleeve, said method comprising all of the following steps:

– The sleeve (15) is introduced into a centering member (20) having an inner cylindrical shape which is complementary to that of the sleeve (15), and the bottom of which is pierced in its center with a cylindrical opening (21) the diameter of which is substantially equal to that of the fiber to be centered,

– subsequently the fiber is introduced into the cylindrical channel (5, 7, 8) of the fitting through a centering sleeve (6) placed within the rearward part of the fitting until the former projects through the cylindrical opening (21) of the centering member (20) in a manner to be centered with respect to said channel (5, 7, 8) of the fitting,

– subsequently a first liquid polymerizable resin (10) is injected into said channel in a manner to maintain the fiber in this position after the polymerization of said first resin, the forward end of the cylindrical channel of the sleeve being further provided with a bevel (12) forming a small cavity at the forward end of the sleeve maintained at a sufficient distance from the bottom of the centering member during this step of introduction of the first resin into said channel to avoid contacting between said first resin and said centering member,

– said centering member is withdrawn after the polymerization of the first resin,

– subsequently said bevel forming a cavity arranged at the forward end of the cylindrical channel of the sleeve is filled with a second polymerizable resin forming a cone projecting with respect to the forward face of the sleeve, and

– finally said fitting is subjected to a planing operation of its forward face.

2. Method according to claim 1, characterized in that the centering member (20) has outer abutments (26) contacting corresponding abutments (24) of the fitting (4).

3. Method according to any of claims 1 and 2, characterized in that the operation of planing of the forward face of the fitting consists in adjusting a polishing tool (50) having a plane face (51) on the sleeve, said polishing tool being pierced by a central opening whereinto the sleeve (15) penetrates, the forward face of the sleeve lying in the plane face of said polishing tool, the second resin (10) and the fiber (2) projecting with respect to the plane face and the forward face aligned with each other being dressed and moved into the same plane as said faces.

# FIG_1

FIG_2

FIG_3

FIG_4